# EUROPEAN PATENT SPECIFICATION

(11) **EP 0 467 556 B1**
(45) Date of publication and mention of the grant of the patent: **25.10.1995**
(21) Application number: 91306034.9
(22) Date of filing: 03.07.1991
(51) Int. Cl.: G11B 5/55

(54) **Disk apparatus and manufacturing method thereof**
Plattengerät und sein Herstellungsverfahren
Appareil avec disque et son moyen de fabrication

(30) Priority: 20.07.1990 JP 190878/90
(43) Date of publication of application: 22.01.1992
(73) Proprietor: International Business Machines Corporation, Armonk, N.Y. 10504 (US)
(72) Inventor: Tsujino, Hitoshi, Tokyo-to (JP)
(74) Representative: Burt, Roger James, Dr.

(56) References cited:
- EP-A- 0 127 058
- EP-A- 0 355 692

## Description

The present invention relates to a disk drive apparatus which drives a head supporting carriage by a voice coil motor.

A typical magnetic hard disk drive apparatus includes a head supporting carriage which is driven by a voice coil motor (VCM) so as to meet the demand for high speed writing and reading. The voice coil motor includes a coil which is connected to the carriage, and a magnet which supplies magnetic flux to the coil. The carriage moves when a current flows through the coil. The coil and magnet are included in an enclosure surrounding a magnetic disk, a head, and the carriage, as shown in Fig.6 and Fig.9 of Japanese Published Unexamined Patent Application No.59-45662.

The surface of the magnet of the voice coil motor is magnetic and hence minute particles such as dust etc. stick to it easily. Also, magnetized particles stick easily to the magnetic disk and magnetic head; this is undesirable since when such particles fall from the disk, the information recorded on the disk can be destroyed.

U.S. Patent 4,700,246 discloses an arrangement in which the disk and the head are isolated from the magnet by the provision of an enclosure solely for the voice coil motor, which is separated from a second enclosure surrounding the disk and head, hence isolating the magnet from the coil of the voice coil motor. The enclosure for the voice coil motor comprises of a cylindrical sleeve with a fringe, a collar with a cylindrical projection, a VCM housing cap, and a VCM housing cap seal.

U.S. Patent 4,700,246 is rather complex since many independent parts, such as the cylindrical sleeve with a fringe, are required to insulate the disk and head from the VCM magnet. Also the technique disclosed in U.S. Patent 4,700,246 for isolating the disk and head from the VCM magnet is not applicable to a head actuator using what is called rotary VCM, in which a head supporting carriage is pivotally supported with respect to a predetermined point and current flowing through the coil causes the carriage to pivot with respect to that predetermined point.

It is an object of the present invention to provide a disk apparatus capable of isolating a magnet of a voice coil motor (VCM) from the disk and head, without requiring independent parts to be provided separately. The disk apparatus should also be capable of manufacture by a simple method.

Another object of the present invention is to provide a technique of isolating a disk and a head from a VCM magnet which is applicable to a disk apparatus having a head actuator using a rotary VCM.

Accordingly the present invention provides a disk drive apparatus of the type in which a head for reading or writing on a disk is supported on a carriage for positioning relative to said disk by a coil attached to said carriage and energisable by magnetic flux generated from a magnet, characterised in that: the disk, head carriage and coil are arranged in an enclosure and said magnet is positioned externally into a recess formed on said enclosure.

Further, the present invention provides a method of manufacturing a disk apparatus which includes a disk, a head to read or write on said disk, a carriage to support said head, and a coil connected to said carriage and energisable by magnetic flow generated from a magnet, said method comprising the steps of: making an enclosure assembly to house the disk, the head, said carriage and said coil in predetermined positions, said enclosure having an opening in an area adjacent to the predetermined position for said coil; covering said opening of said enclosure assembly with a diaphragm; arranging said disk, said head, said carriage, and said coil at said predetermined positions in said enclosure assembly; and positioning a magnet outside of said enclosure assembly so that said magnet is located in said opening next to said thin film sheet. The diaphragm can either be located on the inside or the outside of said enclosure. If it is to be located on the inside then it would usually be positioned before placing the disk, etc inside the enclosure. If it is to be located on the outside then the step of locating the diaphragm can take place either before or after arranging the disk, etc within the enclosure.

The disk apparatus of the present invention does not require independent parts to be provided because the enclosure of the disk, head, and carriage itself isolates the disk and the head from the magnet.

Also, the present invention is applicable to a disk apparatus having a head actuator using a rotary VCM because the enclosure for the coil also houses the disk and head, and does not interfere with pivoting of the coil. The aforementioned U.S. Patent 4,700,246 cannot be applied to a disk apparatus using the rotary VCM because the coil is surrounded by a cylindrical sleeve, and therefore, although the coil can move in the direction of the cylindrical sleeve axis, although it cannot move in the direction which crosses the cylindrical sleeve axis.

The present invention will be described further by way of example only, with reference to an embodiment thereof as illustrated in the accompanying drawings in which:
FIG. 1 is an exploded perspective view showing an embodiment of a magnetic hard disk apparatus in accordance with the present invention;
FIG. 2 is a perspective view showing the appearance of the magnetic hard disk apparatus of FIG. 1;
FIG. 3 is a cross-sectional view of FIG. 2 along plane B;
FIG. 4 is a cross-sectional view showing an assembly of the embodiment of FIG. 1, outside of a clean room;
FIG. 5 is an exploded present view showing another embodiment of a magnetic hard disk apparatus in accordance with the present invention;
FIG. 6 is a perspective view showing the appearance of the magnetic hard disk apparatus of FIG. 5;
FIG. 7 is a cross-sectional view of FIG. 5 along plane C; and
FIG. 8 is a cross-sectional view showing an assembly of the embodiment of FIG. 5, outside of the clean room.

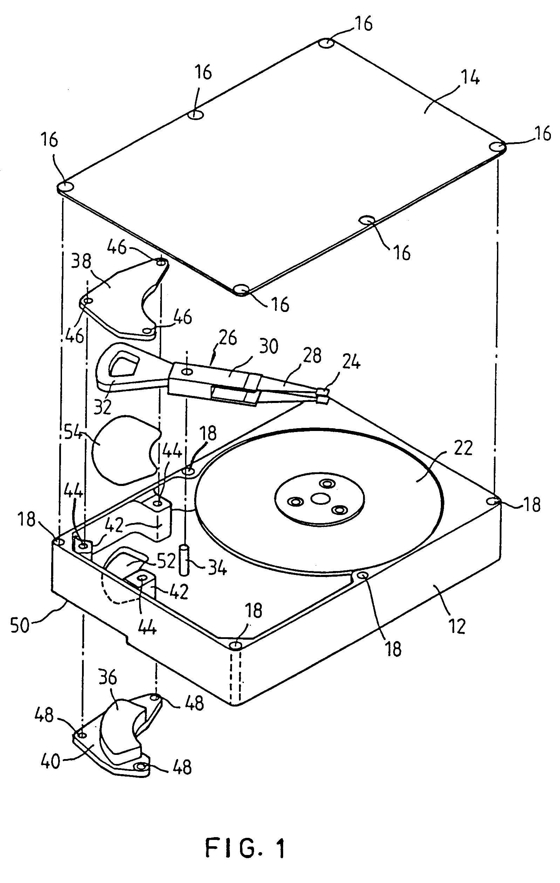

Referring firstly to Figures 1, 2 and 3, an enclosure 10 is composed of a bottom casing 12 and an upper cover 14 both of which are aluminum die-casted. Holes 16 are formed at six points along the edges of the upper cover 14, and holes 18 are formed at six corresponding points along the edges of the bottom casing 12. The holes 18 are threaded. The upper cover 14 is fixed to the bottom casing 12 by threaded bolts 20 which are fitted into the holes 18 through the holes 16.

The magnetic hard disk 22 is fixed onto a hub of a spindle motor (not shown) which is fixed to the bottom casing 12, and is rotated by the spindle motor. Head 24 which reads and writes on the magnetic hard disk 22 is supported by a carriage 26. The carriage 26 has a suspension 28 to the apex of which the head 24 is mounted, and an arm 30 supports the suspension 28. The arm 30 is connected to a coil 32 which forms one component of a voice coil motor (VCM).

The carriage 26 is pivotally mounted through a bearing (not shown) to a pivot 34 fixed on the bottom casing 12. The carriage 26 pivots with respect to the pivot 34 as current is generated in the coil 32 by the magnetic field produced by a flat magnet 36, which is another component of the VCM. This movement enables the head 24 to seek or follow a required track on the disk 22.

The path of the magnetic flux that is produced by the magnet 36 is determined by an upper yoke 38 and a lower yoke 40 which are made of material of a high magnetic permeability such as iron. Three yoke holding projections 42 are formed in the bottom casing 12 within the area covered by the movement of the coil 32. Threaded through-holes 44 are formed through these yoke holding projections 42. Holes 46 and 48 are formed through the upper and lower yokes 38 and 40, at positions corresponding to the through holes 44 in the projections 42 of the bottom casing 12.

The permanent magnet 36 is fixed to the side of the lower yoke 40 that faces the coil 32. In the area of the bottom casing 12 where the lower yoke 40 is placed, a recess 50 is formed which is recessed toward the inside of the bottom casing 12. The depth of this recess coincides with the height of the lower yoke 40. Further, an opening 52 is formed in the area where the magnet 36 is placed in the recess 50 of the bottom casing 12. This opening 52 is closed by adhering a thin film sheet 54 of non-magnetic material to the inside of the bottom casing 12. As a result, the thin film sheet 54 becomes a part of the enclosure 10.

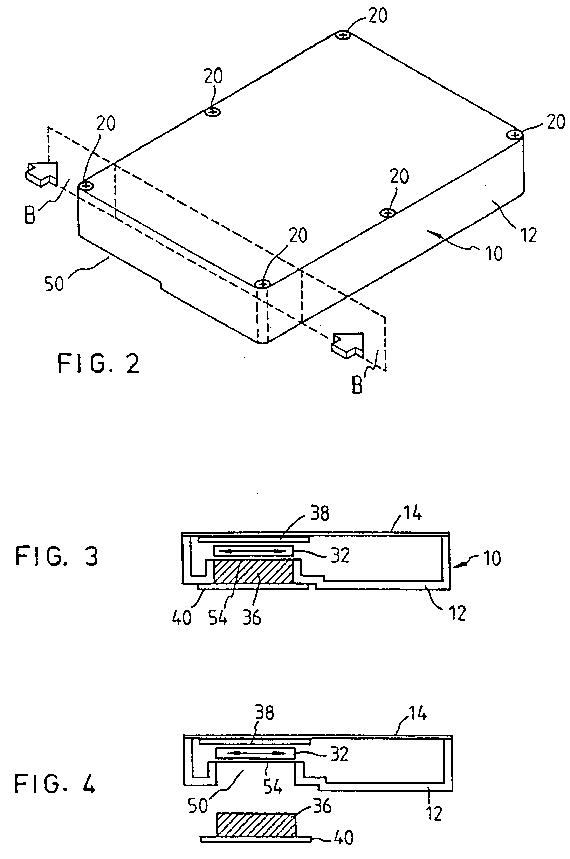

The upper yoke 38 is fixed to the bottom casing 12 with threaded bolts which are fitted into the through holes 44 of the yoke holding projections 42 through the holes 46 of the upper yoke 38. The height of the yoke holding projections 42 is set so that the upper yoke 38 is separated from the coil 32 by a fixed distance when the upper yoke 38 is fixed to the bottom casing 12 as shown in FIG. 3. The lower yoke 40 is fixed to the bottom casing 12 with threaded bolts which are fitted into the through hole 44 of the yoke holding projections 42, through the holes 46 of the upper yoke 38.

When the lower yoke 40 is fixed to the recess 50 of the bottom casing 12, as shown in FIG. 3, the magnet 36 is adjacent to the coil 32 and so is able to supply the magnetic flux to the coil 32. Further, the magnet 36 is isolated from the coil 32 by the thin film sheet 54, and is indeed isolated from the other components of the disk apparatus by the enclosure 10 that surrounds the disk 22, head 24, carriage 30, and coil 32. Therefore particles such as dust attracted by the magnet 36 will not be able to stick to the disk 22 or head 24. The chance of magnetized particles sticking to the disk, and the possibility of stored information on the disk being damaged are hence greatly reduced.

It is desirable for the material used as the thin film sheet 54 to have a magnetic permeability equivalent to that of air, so as not to disturb the magnetic flux in the gap between the magnet 36 and the coil 32. Polyester, for example, is a good candidate for this material.

Further, the gap between the magnet 36 and the coil 32 will not increase the height of the magnetic hard disk apparatus because only the thin film sheet 54 is actually placed between the magnet 36 and the coil 32.

Also, the recess 50 and hole 52 allow the magnet 36 and yoke 40 to be incorporated externally to the enclosure 10 (including the thin film sheet 54) without increasing the thickness of the magnetic hard disk apparatus.

To manufacture or assemble the magnetic hard disk apparatus shown in FIGS. 1, 2, and 3, in a clean room, the opening 52 in the bottom casing 12 is covered with the thin film sheet 54, and then the disk 22, the spindle motor for driving this disk, the head 24, carriage 26, coil 32, and the upper yoke 38 are located in their predetermined positions. Finally the upper cover 14 is fixed onto the bottom casing 12.

The magnet 36 and the lower yoke 40 can then be fixed in the recess 50 of the bottom casing 12, as shown in FIG. 4, without the need for a clean room. Since the need to handle the magnets 36 in the clean room and the need for any measures to be taken against dust have been eliminated, work efficiency increases.

It should be noted that the opening 52 of the bottom casing 12 may be covered in the clean room after placing the disk 22 and other components in the bottom casing 12, by adhering the thin film sheet 54 from the outside of the bottom casing 12.

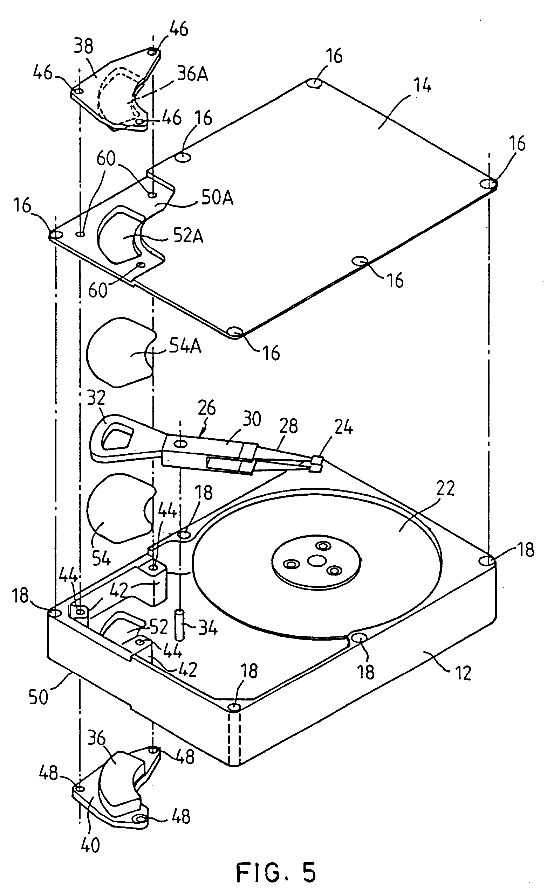

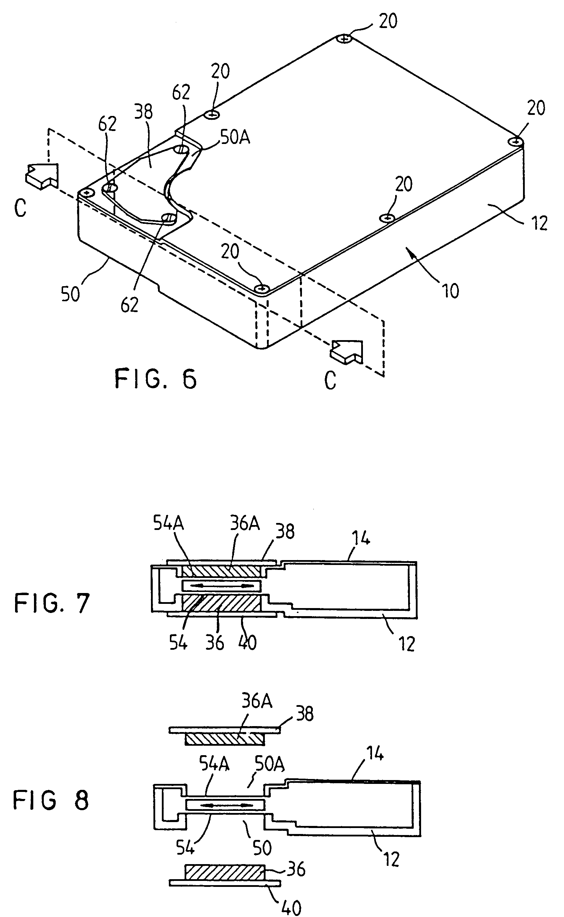

FIGS. 5, 6 and 7 show an embodiment of the present invention in which a rotary VCM is used. The use of a rotary VCM necessitates the incorporation of magnets on both sides of the coil. In FIGS. 5 and 6, the components which are identical to the ones in FIGS. 1, 2, and 3, are assigned with an identical reference number, so their descriptions are omitted.

Referring to FIGS. 5, 6, and 7, a flat magnet 36A is fixed to the upper cover 14 side of the upper yoke 38. The permanent magnet 36A has the same shape and size as the magnet 36 which is fixed to the lower yoke 40. In the area of the upper cover 14 where the upper yoke 38 is placed, a recess 50A is formed which is recessed toward the inside of the cover 12. The depth of this recess 50A coincides with the height of the upper yoke 38. Further, an opening 52A is formed in the recess 50A to incorporate the magnet 36A when the upper yoke 38 is placed in the recess 50A. This opening 52A is closed by adhering a thin film sheet 54A of the same material as the thin film sheet 54, to the inside of the upper cover 14. As a result, the thin film sheet 54A also becomes a part of the enclosure 10.

Holes 60 are formed through the recess 50A at positions corresponding to the through-holes 44 of the yoke holding projections 42. The upper yoke 38 is fixed to the bottom casing 12 by threaded bolts 62 which are fitted into the thread of the through holes 44 of the yoke holding projections 42, via the holes 46 of the upper yoke 38 and the holes 60 of the recess 50A.

When the upper and lower yokes 38 and 40 are respectively fixed to the recesses 50 and 50A of the upper cover 14 and the bottom casing 12, the magnets 36A and 36 are adjacent to the coil 32, and are therefore able to supply magnetic flux to the coil 32, as shown in FIG. 7. Accordingly, by supplying current to the coil 32, the carriage 26 which is connected to the coil 32 can be moved.

The embodiment shown in FIGS. 5, 6, and 7 can obtain the same effect as in the embodiment shown by FIGS. 1, 2, and 3. It should be noted that in the embodiment of FIGS. 5, 6, and 7, both magnets 36 and 36A can be assembled outside of the clean room, as shown in FIG. 8.

In the above embodiment, the thin film sheets 54 and 54A are made of non-magnetic material, but a weak magnetic substance such as aluminum can also be used. The use of strong magnetic substances is not desired, because placing a strong magnetic substance in between the coil 32 and magnet 36 or 36A might create a deficiency in the supply of magnetic flux to the coil 32, and prevent an even distribution of magnetic flux over the area of movement of the coil 32 from being be maintained.

In the above embodiment, the enclosure 10 is comprised of the upper cover 14, the bottom casing 12, and the thin film sheet 54 (and 54A), but the bottom casing 12 and thin film sheet 54 (and 54A) can alternatively be made in one piece from the same material such as plastic.

Additionally, although the above embodiment uses a rotary VCM, the present invention can also be applied to a linear VCM using flat magnets.

The disk apparatus of the preferred embodiment requires no additional independent parts for isolating the coil from the magnet, and is able to use a rotary VCM.

The part of the disk apparatus which isolates the coil from the magnet is of simple construction and hence can be easily manufactured.

## Claims

1. A disk drive apparatus of the type in which a head (24) for reading or writing on a disk (22) is supported on a carriage (26) for positioning relative to said disk by a coil (32) attached to said carriage (26) and energisable by magnetic flux generated from a magnet (36), characterised in that:
the disk (22), head (24), carriage (26) and coil (32) are arranged in an enclosure (10) and said magnet (36) is positioned externally into a recess (50) formed on said enclosure (10).

2. An apparatus as claimed in Claim 1 wherein a portion of said enclosure (10) between said coil (32) and said magnet (36) is composed of material that has a low magnetic susceptibility.

3. An apparatus as claimed in Claim 1 wherein a portion of said enclosure (10) between said coil (32) and said magnet (36) is composed of material that is non-magnetic.

4. An apparatus as claimed in any of Claims 1, 2, or 3, wherein a portion of said enclosure (10) between said coil (32) and said magnet (36) is a diaphragm (54).

5. An apparatus as claimed in any preceding Claim wherein the whole of said enclosure (10) is composed of the same material.

6. An apparatus as claimed in any preceding Claim wherein said magnet (36) is a flat magnet, the surface of said coil (32) adjacent to said magnet (36) is flat, an area of said enclosure (10) adjacent to said coil (32) is shaped to form a recess (50), and said flat magnet (36) is positioned in said recess (50).

7. An apparatus as claimed in any preceding Claim, wherein said carriage (26) is supported so that it can pivot with respect to a predetermined point, and current flowing in said coil (32) causes said carriage (26) to pivot with respect to said predetermined point.

8. An apparatus as claimed in Claim 7 wherein two recesses (50, 50A) are formed in two areas of said enclosure (10), both areas being adjacent to said coil (32) but on opposite sides of said coil (32), and a magnet is positioned in each of said two recesses.

9. A method of manufacturing a disk apparatus which includes a disk (22), a head (24) to read or write on said disk, a carriage (26) to support said head, and a coil (32) connected to said carriage (26) and energisable by magnetic flux generated from a magnet (36), said method comprising the steps of:
making an enclosure assembly (10) to house the disk (22), the head (24), said carriage (26) and said coil (32) in predetermined positions, said enclosure (10) having an opening (52) in an area adjacent to the predetermined position for said coil;
covering said opening (52) of said enclosure assembly (10) with a diaphragm (54);
arranging said disk (22), said head (24), said carriage (26), and said coil (32) at said predetermined positions in said enclosure assembly (10); and
positioning a magnet (36) outside of said enclosure assembly (10) so that said magnet (36) is located in said opening (52) next to said thin film sheet (54).

## Patentansprüche

1. Ein Plattenlaufwerksgerät des Typs, in dem ein Kopf (24) zum Lesen oder Schreiben auf einer Platte (22) auf einem Träger (26) gelagert ist, um Positioniervorgänge relativ zu dieser Platte durch eine mit diesem Träger (26) verbundene Spule (32) durchzuführen, die von dem in einem Magneten (36) erzeugten magnetischen Fluß erregt wird, dadurch gekennzeichnet, daß:
Platte (22), Kopf (24), Träger (26) und Spule (32) in einem Gehäuse (10) angeordnet sind und der Magnet (36) außerhalb in einer Aussparung (50) im Gehäuse (10) angeordnet ist.

2. Ein Gerät wie in Patentanspruch 1 niedergelegt, bei dem ein Teil des Gehäuses (10) zwischen der Spule (32) und dem Magneten (36) aus einem Material mit geringer magnetischer Empfindlichkeit besteht.

3. Ein Gerät wie in Patentanspruch 1 niedergelegt, bei dem ein Teil des Gehäuses (10) zwischen der Spule (32) und dem Magneten (36) aus nichtmagnetischem Material besteht.

4. Ein Gerät wie in einem beliebigen der Patentansprüche 1, 2 oder 3 niedergelegt, bei dem ein Teil des Gehäuses (10) zwischen der Spule (32) und dem Magneten (36) aus einer Membran (54) besteht.

5. Ein Gerät wie in einem beliebigen der vorstehenden Patentansprüche niedergelegt, bei dem das gesamte Gehäuse (10) aus dem gleichen Material besteht.

6. Ein Gerät wie in einem beliebigen der vorstehenden Patentansprüche niedergelegt, bei dem der Magnet (36) als Flachmagnet ausgebildet ist, die Oberfläche der an den Magneten (36) angrenzenden Spule (32) flach ist, ein Bereich des Gehäuses (10) neben der Spule (32) so geformt ist, daß eine Aussparung (50) gebildet wird, und der Flachmagnet (36) in diese Aussparung (50) eingesetzt wird.

7. Ein Gerät wie in einem beliebigen der vorstehenden Patentansprüche niedergelegt, bei dem der Träger (26) so gelagert ist, daß er relativ zu einem vorbestimmten Punkt schwenkbar ist, und der durch die Spule (32) fließende Strom bewirkt, daß der Träger (26) relativ zum vorbestimmten Punkt geschwenkt werden kann.

8. Ein Gerät wie in Patentanspruch 7 niedergelegt, bei dem zwei Aussparungen (50, 50A) in zwei Bereichen des Gehäuses (10) gebildet werden, wobei beide Bereiche an die Spule (32) angrenzen, jedoch auf entgegengesetzten Seiten der Spule (32), und ein Magnet in jeder der beiden Aussparungen angeordnet ist.

9. Ein Verfahren zur Fertigung eines Plattengeräts, das eine Platte (22), einen Kopf (24) für Schreib-/Lesevorgänge auf der Platte, einen Träger (26) zur Lagerung des Kopfes und eine Spule (32) einschließt, die mit dem Träger (26) verbunden ist und von dem von einem Magneten (36) erzeugten Magnetfluß erregt wird, wobei das Verfahren die folgenden Schritte umfaßt:
Fertigung einer Gehäusebaugruppe (10) zur Unterbringung der Platte (22), des Kopfes (24), des Trägers (26) und der Spule (32) in vorbestimmten Positionen, wobei das Gehäuse (10) eine Öffnung (52) in einem Bereich aufweist, der an die vorbestimmte Position für die Spule angrenzt;
Abdeckung der Öffnung (52) der Gehäusebaugruppe (10) durch eine Membran (54);
Anordnen der Platte (22), des Kopfes (24), des Trägers (26) und der Spule (32) in vorbestimmten Positionen in der Gehäusebaugruppe (10); und
Positionierung eines Magneten (36) außerhalb der Gehäusebaugruppe (10), so daß sich der Magnet (36) in der öffnung (52) neben der dünnen Filmschicht (54) befindet.

## Revendications

1. Appareil d'unité de disque du type dans lequel une tête (24) de lecture ou d'écriture sur un disque (22) est supportée sur un chariot (26) permettant le placement en fonction du dit disque (22) par une bobine (32) fixée au dit chariot (26) et alimentable par un flux magnétique produit par un aimant (36), caractérisé en ce que:
les disque (22), tête (24), chariot (26) et bobine (32) sont disposés dans une enceinte (10) et le dit aimant (36) est positionné à l'extérieur dans un renfoncement (50) formé par la dite enceinte (10).

2. Appareil tel que revendiqué dans la revendication 1 dans lequel une partie de la dite enceinte (10) entre la dite bobine (32) et le dit aimant (36) est composée d'un matériau qui a une faible susceptibilité magnétique.

3. Appareil tel que revendiqué dans la revendication 1 dans lequel une partie de la dite enceinte (10) entre la dite bobine (32) et le dit aimant (36) est composée d'un matériau qui est amagnétique.

4. Appareil tel que revendiqué dans l'une quelconque des revendications 1, 2 ou 3, dans lequel une partie de la dite enceinte (10) entre la dite bobine (32) et le dit aimant (36) est un diaphragme (54).

5. Appareil tel que revendiqué dans l'une quelconque des revendications précédentes dans lequel la dite enceinte (10) toute entière est composée du même matériau.

6. Appareil tel que revendiqué dans l'une quelconque des revendications précédentes dans lequel le dit aimant (36) est un aimant plat, la surface de la dite bobine (32) contiguë au dit aimant (36) est plate, une zone de la dite enceinte (10) contiguë à la dite bobine (32) forme un renfoncement (50), et le dit aimant plat (36) est positionné dans le dit renfoncement (50).

7. Appareil tel que revendiqué dans l'une quelconque des revendications précédentes dans lequel le dit chariot (26) est supporté de manière à pouvoir pivoter par rapport à un point prédéterminé, et la circulation du courant dans la dite bobine (32) fait pivoter le dit chariot (26) par rapport au dit point prédéterminé.

8. Appareil tel que revendiqué dans la revendication 7 dans lequel deux renfoncements (50, 50A) sont formés dans deux zones de la dite enceinte (10), chaque zone étant contiguë à la dite bobine (32) mais sur des côtés opposés de la dite bobine (32), et un aimant est positionné dans chacun de ces deux dits renfoncements.

9. Méthode de fabrication d'un appareil avec disque qui comprend un disque (22), une tête (24) pour lire ou écrire sur le dit disque (22), un chariot (26) pour supporter la dite tête (24), et une bobine (32) connectée au dit chariot (26) et alimentable par un flux magnétique produit par un aimant (36), la dite méthode comportant les étapes suivantes:
faire un montage de l'enceinte (10) destiné à loger le dit disque (22), la dite tête (24), le dit chariot (26) et la dite bobine (32) dans des positions prédéterminées, la dite enceinte (10) comportant une ouverture (52) dans une zone contiguë à la position prédéterminée de la dite bobine (32);
couvrir la dite ouverture (52) du dit montage de l'enceinte (10) d'un diaphragme (54);
disposer le dit disque (22),la dite tête (24),le dit chariot (26), et la dite bobine (32) aux dites positions prédéterminées dans le dit montage de l'enceinte (10); et
positionner un aimant (36) à l'extérieur du dit montage de l'enceinte (10) de manière à ce que le dit aimant (36) se trouve dans la dite ouverture (52) à côté du dit film mince (54).
